# DEMANDE DE BREVET EUROPEEN

(11) **EP 2 282 441 A1**
(43) Date de publication de la demande: **09.02.2011**
(21) Numéro de dépôt: 10171120.8
(22) Date de dépôt: 28.07.2010
(51) Int. Cl.: H04L 9/08, H03M 13/15

(54) **Procédé sécurisé de reconstruction d'une mesure de référence d'une donnée confidentielle à partir d'une mesure bruitée de cette donnée, notamment pour la génération de clés cryptographiques**

(30) Priorité: 28.07.2009 FR 0903699
(71) Demandeur: Thales, 92200 Neuilly Sur Seine (FR)
(72) Inventeur: Garnier, Steven, 92704, COLOMBES CEDEX (FR); Marcello, Sandra, 92704, COLOMBES CEDEX (FR)
(74) Mandataire: Dudouit, Isabelle

(57) **Abrégé**

La présente invention concerne un procédé sécurisé de reconstruction d'une mesure de référence d'une donnée confidentielle à partir d'une mesure bruitée de cette donnée. Le procédé propose une phase d'enrôlement d'une donnée de référence w à n chiffres, comprenant au moins les étapes suivantes :
■ sélectionner un code correcteur d'erreur C d'une longueur L supérieure à n ;
■ générer (202) une donnée étendue Wₑ en augmentant la taille de la donnée de référence w avec L-n chiffres composant une clé Sₖ ;
■ choisir un mot c du code correcteur d'erreur C sélectionné ;
■ générer (204) la donnée s de reconstruction en combinant ledit mot c avec ladite donnée étendue Wₑ.

L'invention s'applique notamment à l'authentification des individus et à la génération de clés cryptographiques, en utilisant par exemple des données biométriques ou les caractéristiques physiques intrinsèques à un composant électronique.

## Description

La présente invention concerne un procédé sécurisé de reconstruction d'une mesure de référence d'une donnée confidentielle à partir d'une mesure bruitée de cette donnée. Elle s'applique notamment à l'authentification des individus et à la génération de clés cryptographiques, en utilisant par exemple des données biométriques ou les caractéristiques physiques intrinsèques à un composant électronique.

Les applications faisant appel à la cryptographie nécessitent généralement le stockage d'une clé dans un appareil, par exemple un appareil électronique. Cependant, bien qu'il soit recommandé d'employer des clés cryptographiques de taille de plus en plus grande pour garantir la sécurité des systèmes d'information, certains appareils ne disposent que d'un faible espace mémoire pour l'enregistrement d'une clé. A titre illustratif, il est couramment recommandé d'employer une clé cryptographique d'au moins 2048 bits pour l'algorithme RSA à clé publique (« Rivest Shamir Adleman »), aujourd'hui largement utilisé dans le commerce électronique. Par ailleurs, lorsque la clé à utiliser est secrète, son stockage peut constituer une faille de sécurité face à un attaquant.

Aussi, pour éviter de stocker une clé cryptographique dans un appareil électronique, il a été proposé de générer une clé à l'aide de données biométriques telles que, par exemple, une empreinte digitale. Récemment, il a été proposé dans l'article « efficient helper data key extractor on FPGa's » C. Bosch, J. Guajardo, A-R. Sadeghi ; J. Shokrollahi et P. Tuyls; CHES 2008 ; LNCS 5154 ; p184-197, de générer une clé cryptographique à partir d'une fonction liée aux caractéristiques physiques propres à un composant électronique, ce type de fonction étant communément désigné par l'acronyme anglo-saxon PUF pour « Physical Unclonable Function » signifiant « fonction physiquement non reproductible ». Toutefois, que les données soient issues de mesures biométriques ou qu'elles soient issues d'une PUF d'un composant électronique, ces données sont bruitées. En effet, pour plusieurs exécutions d'un même traitement prenant systématiquement en entrée la même donnée de référence, les mesures physiques en sortie de ce traitement ne sont pas strictement identiques, bien qu'étroitement liées. Une illustration pratique de ce principe est un capteur d'empreinte digitale qui, pour un doigt donné, ne produit pas systématiquement la même caractérisation de ce doigt en sortie, du fait des variations de positionnement du doigt sur le capteur, de son humidité, de sa température et d'autres paramètres physiques non maîtrisés. Par conséquent, ces mesures physiques ne peuvent être directement utilisées comme clé cryptographique, car des informations cryptées avec une première donnée de mesure issue d'une première occurrence d'un traitement de la donnée de référence ne pourraient pas être décryptées avec une seconde donné de mesure issue d'une seconde occurrence de ce même traitement.

De plus, les données mesurées ne sont, a priori, pas uniformément distribuées. Autrement dit, même en l'absence de bruit, la mesure ne pourrait pas constituer une clé cryptographique sûre.

Ces deux problèmes que sont le caractère non uniforme des données mesurées et la présence de bruit - donc l'instabilité de ces données - ont été traités par Dodis et al dans l'article intitulé « Fuzzy Extractors: How to generate strong keys from biometrics and other noisy data » présenté à EUROCRYPT 2004 : LNCS, vol.3027, pages 523-540 Springer (dernière version SIAM J. Comput., vol 38 issue 1 p 97-139,2008. Pour rendre les données stables malgré la présence de bruit, les auteurs de cet article proposent l'utilisation d'un extracteur flou. Une possibilité pour construire un extracteur flou est l'utilisation de deux primitives. Un premier module, désigné par l'expression anglo-saxonne « secure sketch » permet la conciliation de l'information, c'est-à-dire le rétablissement d'une valeur systématiquement identique en sortie pour une même donnée d'entrée, et un second module permet de rendre uniforme la sortie de l'extracteur flou par application d'une fonction d'extraction d'aléa sur ladite sortie, préalablement stabilisée. L'extracteur flou fonctionne en deux phases : l'enrôlement et la correction. Ces deux phases se retrouvent dans le module « secure sketch»: l'enrôlement et la correction. La phase d'enrôlement peut n'être exécutée qu'une seule fois ; elle produit, à partir d'une donnée de référence, notée w, issue d'une mesure d'une donnée confidentielle notée W fournie en entrée, une donnée publique, notée s et parfois qualifiée de «sketch». Classiquement, la donnée de référence w peut être obtenue via une première mesure issue d'un traitement d'une donnée confidentielle W reçue par un capteur ou un composant électronique. A titre illustratif, la donnée confidentielle W est une empreinte digitale et la donnée de référence w est la donnée caractéristique obtenue par une première mesure de cette empreinte par un capteur. Seule la donnée publique s est enregistrée, la donnée de référence w étant confidentielle. Par la suite, la phase de correction est exécutée à chaque fois que l'on souhaite retrouver la donnée de référence w. A cette fin, une donnée bruitée w' provenant d'une mesure issue d'un traitement de la donnée confidentielle W - par exemple, une seconde mesure de la même empreinte digitale - est combinée à la donnée publique s. La donnée publique s joue donc un rôle de reconstruction de la mesure confidentielle de référence w à partir d'une donnée bruitée w'. Si la donnée bruitée w' est trop éloignée de la donnée de référence w, cette donnée de référence w ne peut pas être reconstruite. C'est le cas, par exemple, lorsque la donnée bruitée w' est obtenue par une mesure d'un traitement d'une donnée X différente de la donnée confidentielle W.

Plus précisément, la reconstruction de la donnée de référence w implique l'utilisation d'un code correcteur d'erreur. Lors de la phase d'enrôlement, un code correcteur est sélectionné, puis un mot, noté c, de ce code est choisi aléatoirement. La donnée de référence w est ensuite combinée avec le mot c pour produire la donnée publique s. Ensuite, lors de la phase de correction, cette donnée publique s est combinée avec la donnée bruitée w' pour produire un mot noté c', lequel n'appartient pas nécessairement au code sélectionné. Le mot c' est soumis à la fonction de décodage du code correcteur. Le mot c' est alors rétabli en mot de code c à condition que la donnée w' soit suffisamment proche de la donnée de référence w. Il suffit ensuite de combiner le mot de code c ainsi retrouvé avec la donnée publique s pour reconstruire la donnée de référence w. Toutefois, cette solution comporte des limites, comme expliqué ci-après.

Pour rappel, un code correcteur d'erreur peut être caractérisé par les trois paramètres que sont respectivement la longueur « n » du code, la dimension « k » du code, et la distance minimale « d » entre deux mots du code, laquelle distance est proportionnelle à la capacité de correction t du code, c'est-à-dire au nombre d'erreurs que le code est capable de corriger dans un mot. Le niveau de bruit subi par la donnée w' impose donc la valeur de la distance minimale «d», la distance utilisée étant généralement la distance de Hamming (pour les empreintes digitales il n'est pas possible d'utiliser la distance de Hamming).

Le niveau de sécurité du système augmente proportionnellement à b^{k}, b étant la base de numération dans laquelle sont exprimés les mots de la donnée. En effet, pour découvrir la donnée d'entrée w par force brute, un attaquant devrait trouver, parmi les b^{k} mots de code possibles de longueur n, celui correspondant au mot du code choisi pour coder la donnée de référence w. Aussi, il est préférable de sélectionner un code correcteur dont la valeur du paramètre k est la plus élevée possible.

Parallèlement, la longueur n du code choisi pour coder la donnée est bornée par la longueur de la donnée de référence w. Partant de la relation de majoration connue (borne du singleton) n-k ≥ d-1, il suit que la dimension k du code est également majorée par n-d+1 et donc majorée par la valeur égale à longueur(w)-d+1.

Compte tenu de ces deux contraintes antagonistes exercées sur le paramètre k, il devient difficile, voire impossible de trouver un code correcteur permettant de reconstruire la donnée d'entrée à partir d'une donnée bruitée tout en garantissant un bon niveau de protection de cette donnée d'entrée, a fortiori lorsque la valeur de d doit être élevée du fait d'un niveau de bruit élevé. Parfois, même lorsqu'un code correcteur répond à toutes ces exigences, son exécution est inenvisageable sur un composant électronique car trop complexe.

Un but de l'invention est de produire une clé cryptographique de manière sécurisée à partir d'une PUF d'un composant électronique ou d'une donnée biométrique. A cet effet, l'invention a pour objet un procédé d'enrôlement d'une donnée de référence w à n chiffres, exécuté par une unité de calcul, ledit procédé étant **caractérisé en ce qu**'il comprend au moins les étapes suivantes :
■ sélectionner un code correcteur d'erreur C d'une longueur L supérieure à n, la capacité de correction du code correcteur d'erreur étant supérieure au nombre attendu d'erreurs entre deux acquisitions de la donnée de référence w, le code correcteur ayant une dimension minimale prédéterminée correspondant à un niveau minimal de sécurité ;
■ générer une donnée étendue Wₑ en augmentant la taille de la donnée de référence w avec L-n chiffres composant une clé secrète Sₖ;
■ choisir aléatoirement un mot c du code correcteur d'erreur C sélectionné ;
■ combiner ledit mot c avec ladite donnée étendue wₑ, de manière à générer une donnée s de reconstruction de wₑ;
■ enregistrer la donnée s sur un support de stockage.

Selon un mode de mise en oeuvre privilégié du procédé d'enrôlement selon l'invention, les données sont des données binaires, et la combinaison du mot c avec la donnée étendue wₑ est effectuée par « ou exclusif».

La clé Sₖ peut être définie par un couple de listes (V, P), la première liste V comprenant L-n chiffres à insérer dans la donnée de référence w, la seconde liste P comprenant pour chacun desdits chiffres à insérer sa position dans ladite donnée. Par exemple, plusieurs portions de la clé peuvent être stockées sur des supports de mémoire différents.

L'invention a également pour objet un procédé de correction de données exécuté par une unité de calcul pour reconstruire une donnée de référence étendue wₑ à L chiffres à partir d'une donnée bruitée w' à n chiffres, n≤L, et d'une donnée s de reconstruction générée lors de l'enrôlement de la donnée de référence w avec le procédé d'enrôlement décrit plus haut, ledit procédé de correction comprenant au moins les étapes suivantes :
■ générer une donnée bruitée étendue wₑ' en augmentant la taille de la donnée bruitée w' avec L-n chiffres composant ladite clé Sₖ;
■ combiner la donnée s de reconstruction avec la donnée bruitée étendue wₑ' pour obtenir un mot c' de longueur L ;
■ décoder le mot c' en mot c" appartenant au code C;
■ combiner le mot c" avec la donnée s de reconstruction pour générer une donnée stabilisée wₛ égale à la donnée de référence étendue wₑ si le mot c" obtenu par décodage est identique au mot c.

Une fois la donnée de référence étendue wₑ reconstruite, il suffit de retirer de cette donnée wₑ les chiffres insérés lors de la phase d'enrôlement pour rétablir, si l'on souhaite, la donnée de référence w initiale. Le procédé de correction selon l'invention permet, à niveau de bruit équivalent, de reconstruire la donnée de référence avec un niveau de sécurité supérieur qu'avec un procédé classique. Corollairement, à niveau de sécurité équivalent, le procédé selon l'invention permet d'augmenter la capacité de correction des données et donc son aptitude à les stabiliser. Il se propose notamment de généraliser les procédés classiques, puisqu'il englobe les cas où L=n.

La donnée bruitée w' peut être fournie par une fonction liée aux caractéristiques physiques propres à un circuit électronique, c'est-à-dire par une PUF. Le circuit électronique peut être intégré à un composant ou sur être réalisé sur une carte électronique, par exemple.

Selon une autre mise en oeuvre du procédé selon l'invention, la donnée bruitée w' est fournie par un capteur biométrique, lequel capteur permet par exemple de mesurer les caractéristiques d'une empreinte digitale, de l'iris d'un oeil ou de la voix d'un individu.

L'invention a également pour objet un procédé de stabilisation sécurisé de données comprenant une étape de détermination de la capacité de correction minimale du code correcteur d'erreur C à employer pour stabiliser lesdites données en fonction du niveau de bruit dont elles sont affectées, une étape de sélection dudit code correcteur d'erreur C parmi plusieurs codes disponibles, ledit code sélectionné C pouvant avoir une longueur supérieure à la longueur n desdites données, un test étant effectué pour déterminer si ledit code sélectionné C a une longueur supérieure à n, le procédé comprenant une étape de création d'une clé Sₖ dans le cas où ledit code C sélectionné a une longueur supérieure à n, au moins un procédé d'enrôlement tel que décrit plus haut, suivi d'un procédé de correction tel que décrit plus haut étant exécutés pour générer une donnée stabilisée.

Avantageusement, le code correcteur d'erreur C est le code de longueur minimale satisfaisant simultanément un critère de capacité de correction du bruit affectant la donnée bruitée w' et un niveau de sécurité souhaité.

L'invention a également pour objet un procédé d'authentification et/ou de génération d'une clé cryptographique comprenant une étape d'extraction d'aléa appliquée à la donnée stabilisée wₛ générée par le procédé de stabilisation sécurisé de données tel que décrit plus haut. L'application, par exemple, d'une fonction de hachage sur la sortie stabilisée wₛ permet de générer une clé cryptographique uniformément distribuée.

Selon une mise en oeuvre du procédé d'enrôlement selon l'invention, une fonction de hachage H est appliquée sur une combinaison de la donnée de référence étendue wₑ avec la donnée de reconstruction s, pour former une donnée hachée h de contrôle. Le procédé d'enrôlement selon l'invention peut ainsi se combiner au principe de « secure sketch » robuste, comme expliqué plus loin.

L'invention a également pour objet un procédé de correction de données exécuté par une unité de calcul pour reconstruire une donnée de référence étendue wₑ à L chiffres à partir d'une donnée bruitée w' à n chiffres, n≤L, et d'une donnée s de reconstruction générée lors de l'enrôlement de la donnée de référence w avec le procédé comprenant l'application d'une fonction de hachage H, ledit procédé de correction étant comprenant au moins les étapes suivantes :
■ générer une donnée bruitée étendue wₑ' en augmentant la taille de la donnée bruitée w' avec L-n chiffres composant ladite clé Sₖ;
■ combiner la donnée s de reconstruction avec la donnée bruitée étendue wₑ' pour obtenir un mot c' de longueur L ;
■ décoder le mot c' en mot c" appartenant au code C;
■ combiner le mot c" avec la donnée s de reconstruction pour générer une donnée stabilisée wₛ;
■ appliquer la fonction de hachage H sur une combinaison de la donnée stabilisée avec la donnée s de reconstruction pour produire une donnée hachée hₛ;
■ comparer la donnée hachée de contrôle h, obtenue lors de l'enrôlement, avec la donnée hachée hₛ;
■ si les données h et hₛ sont différentes, produire une valeur ⊥ indiquant une erreur.

L'invention a également pour objet un système électronique d'authentification comportant un capteur biométrique, **caractérisé en ce qu**'il comprend un support d'enregistrement mémorisant une clé secrète Sₖ, une unité de calcul mettant en oeuvre le procédé d'authentification tel que décrit plus haut, ladite unité de calcul étant apte à recevoir la clé secrète Sₖ issue dudit support et une donnée bruitée w' issue dudit capteur.

Le procédé selon l'invention permet de reconstruire une donnée de référence w à partir d'une mesure bruitée w' de cette donnée w tout en préservant l'inaccessibilité à cette donnée w si la mesure bruitée w' n'est pas effectué sur ladite donnée de référence w.

D'autres caractéristiques apparaîtront à la lecture de la description détaillée donnée à titre d'exemple et non limitative qui suit faite en regard de dessins annexés qui représentent :

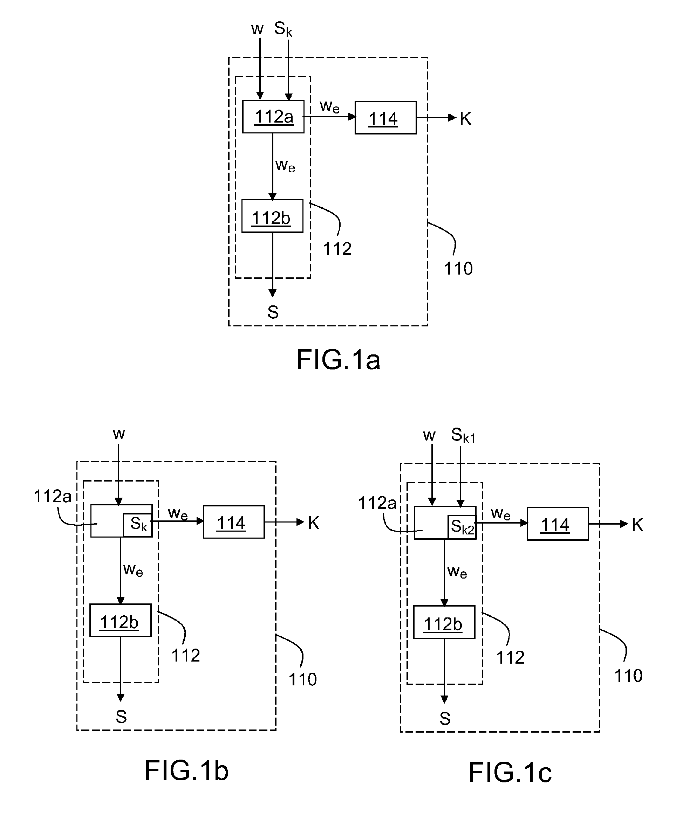

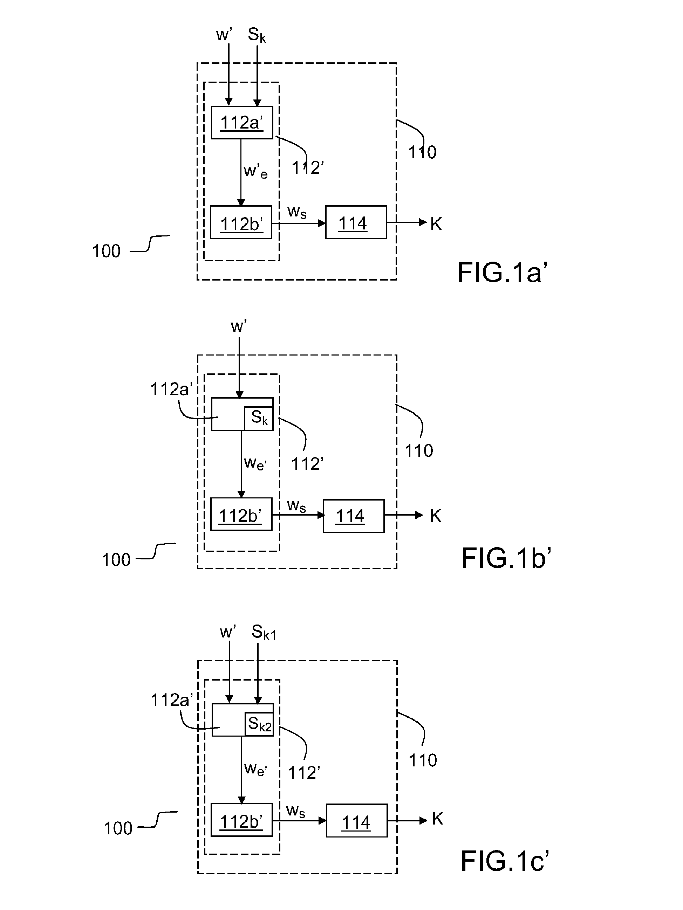

- les figures 1a, 1b et 1c, des synoptiques illustrant le principe de la fonction de génération d'un extracteur flou permettant de générer une clé cryptographique avec un procédé selon l'invention;
- les figures 1a', 1b' et 1c', des synoptiques illustrant le principe de la fonction de reproduction d'un extracteur flou permettant de reproduire une clé cryptographique avec un procédé selon l'invention;
- la figure 2a, un synoptique illustrant les étapes d'une phase d'enrôlement d'une première mise en oeuvre du procédé selon l'invention;
- la figure 2b, un synoptique illustrant les étapes d'une phase de correction de la première mise en oeuvre du procédé selon l'invention;
- la figure 3, un synoptique illustrant un cadre d'exécution du procédé selon l'invention;
- la figure 4a, un synoptique illustrant les étapes d'une phase d'enrôlement d'une deuxième mise en oeuvre du procédé selon l'invention;
- la figure 4b, un synoptique illustrant les étapes d'une phase de correction de la deuxième mise en oeuvre du procédé selon l'invention;
- la figure 5, un exemple de système électronique mettant en oeuvre le procédé d'authentification selon l'invention.

Dans un souci de clarté, des références identiques dans des figures différentes désignent les mêmes éléments.

La figure 1a présente un synoptique illustrant le principe de la fonction de génération d'un extracteur flou permettant de générer une clé cryptographique avec un procédé selon l'invention. L'extracteur flou 110 comporte un module 112 d'enrôlement des données et un extracteur d'aléa standard 114. Le module 112 d'enrôlement des données permet de produire une donnée de reconstruction s à partir d'une donnée de référence w; il comprend un module d'expansion 112a et un module « secure sketch» classique 112b. La donnée de référence w est reçue par l'extracteur flou 110 sous forme numérisée, par exemple sous la forme d'une suite de n bits.

Le module d'expansion 112a est apte à recevoir en entrée la donnée de référence w et une clé Sₖ de préférence secrète, et à produire en sortie une donnée de référence étendue wₑ dont la longueur est supérieure à celle de la donnée de référence w. La donnée de référence étendue wₑ est fournie à l'extracteur d'aléa 114, lequel produit en sortie la clé cryptographique K. Le module « secure sketch » classique 112b est apte à recevoir en entrée la donnée de référence étendue wₑ et est apte à produire en sortie une donnée publique s de reconstruction de la même longueur que celle de la donnée étendue wₑ.

La figure 1b présente une variante du mode de réalisation de la figure 1a'. Selon le mode de réalisation de la figure 1b', la clé secrète Sₖ est mémorisée au sein de l'extracteur flou, dans l'exemple, au sein du module d'expansion 112a. Selon ce mode de réalisation, cette clé secrète Sₖ n'est donc pas fournie en entrée du module d'enrôlement des données 112.

La figure 1c présente une variante hybride du mode de réalisation de la figure 1a et de la figure 1b. Selon le mode de la figure 1c, une partie Sₖ₂ de la clé secrète Sₖ est mémorisée au sein de l'extracteur flou, dans l'exemple, au sein du module d'expansion 112a, et une autre partie Sₖ₁ de la clé secrète est fournie en entrée du module d'enrôlement des données 112.

La figure 1a' présente un synoptique illustrant le principe de la fonction de reproduction d'un extracteur flou permettant de reproduire une clé cryptographique avec un procédé selon l'invention. L'extracteur flou 110 comporte un module 112' de stabilisation des données et un extracteur d'aléa standard 114. Le module 112' de stabilisation des données permet de fournir systématiquement la même donnée en sortie pour des données d'entrées proche d'une donnée de référence ; il comprend un module d'expansion 112a' et un module « secure sketch» classique 112b'. La fonction de reproduction de l'extracteur flou 110 permet de reproduire une clé cryptographique K à partir d'une donnée w' bruitée, par exemple issue d'une PUF d'un composant électronique. La donnée bruitée w' est reçue par l'extracteur flou 110 sous forme numérisée, par exemple sous la forme d'une suite de n bits.

Le module d'expansion 112a' est apte à recevoir en entrée la donnée bruitée w' et une clé Sₖ identique à celle utilisée pour la phase d'enrôlement, et à produire en sortie une donnée bruitée étendue wₑ' dont la longueur est supérieure à celle de la donnée bruitée w'. Le module « secure sketch » classique 112b' est apte à recevoir en entrée une donnée bruitée étendue wₑ' et est apte à produire en sortie une donnée stabilisée wₛ de la même longueur que celle de la donnée étendue wₑ. Enfin, la donnée stabilisée wₛ est fournie à l'extracteur d'aléa 114, lequel produit en sortie la clé cryptographique K.

La figure 1b' présente une variante du mode de réalisation de la figure 1a'. Selon le mode de réalisation de la figure 1b', la clé secrète Sₖ est mémorisée au sein de l'extracteur flou, dans l'exemple, au sein du module d'expansion 112a'. Selon ce mode de réalisation, cette clé secrète Sₖ n'est donc pas fournie en entrée du module de stabilisation des données 112'.

La figure 1c' présente une variante hybride du mode de réalisation de la figure 1a' et de la figure 1b'. Selon le mode de la figure 1c', une partie Sₖ₂ de la clé secrète Sₖ est mémorisée au sein de l'extracteur flou, dans l'exemple, au sein du module d'expansion 112a', et une autre partie Sₖ₁ de la clé secrète est fournie en entrée du module de stabilisation des données 112'.

L'extracteur flou 110 peut être mis en oeuvre par une unité de calcul, par exemple un microprocesseur couplé à une mémoire contenant les instructions nécessaire à son exécution ou un circuit programmable, par exemple de type FPGA (« Field-Programmable Gate Array »).

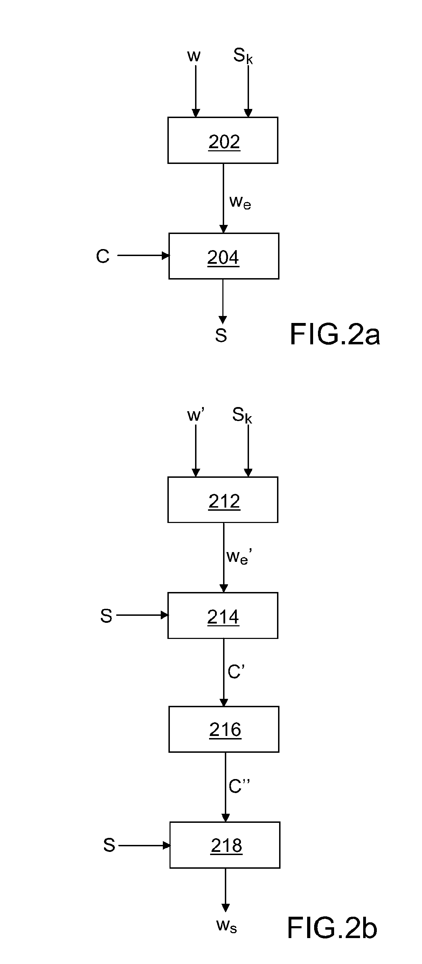

La figure 2a est un synoptique illustrant les étapes d'une phase d'enrôlement mettant en oeuvre le procédé selon l'invention. La phase d'enrôlement permet de générer une donnée publique s permettant à une personne possédant une mesure bruitée de cette donnée confidentielle, de reconstruire ladite donnée confidentielle.

Une clé secrète Sₖ est créée, par exemple, en comprenant deux listes V et P. La première liste V = {v₁, v₂, ..., V_{L-n}} définit L-n valeurs à insérer dans la donnée de référence w pour augmenter sa taille et la seconde liste P = { p₁, p₂, ... , p_{L-n}} définit, pour chacune des valeurs de la liste V, la position à laquelle cette valeur doit être insérée. Cet exemple est non limitatif, mais ce mode de définition de la clé secrète Sₖ comporte notamment l'avantage de pouvoir stocker séparément les deux listes V et P afin d'accroître le niveau de sécurité du procédé. En reprenant l'exemple de la fonction de reproduction de l'extracteur flou 110 illustrée en figure 1c', la première liste V peut être stockée au sein dudit extracteur flou (partie de la clé référencée Sₖ₂) tandis que la seconde liste P peut être stockée sur un dispositif séparé, par exemple un support de masse externe tel qu'une clé USB, et être fournie en entrée du système 100 (partie de la clé référencée Sₖ₁) lorsqu'un accès à cette clé est demandé.

Les L-n valeurs de la liste V sont insérées 202 dans la donnée de référence w (de taille n), de sorte à obtenir une donnée wₑ étendue de longueur L. Ensuite, une fonction 204 de « secure sketch » classique est exécutée sur la donnée étendue wₑ pour produire la donnée publique s de taille L : un mot de code c est choisi aléatoirement dans le code correcteur C et la donnée étendue wₑ est combinée avec le mot de code c.

Un exemple de « secure sketch » est la construction dite « code-offset» décrite ci-après. L'opération s = wₑ ⊕ c est effectuée, le symbole « ⊕» désignant l'opérateur « ou exclusif», les opérandes wₑ et c étant considérées, dans l'exemple, comme des données binaires. La donnée s est une donnée publique non sensible, donc stockée, par exemple, dans l'appareil électronique exécutant l'extracteur flou.

La figure 2b est un synoptique illustrant les étapes d'une phase de correction avec une première mise en oeuvre du procédé selon l'invention. La phase de correction permet, à partir d'une mesure bruitée w' d'une donnée confidentielle et de la donnée publique s de reconstruction générée lors de la phase d'enrôlement, de reconstruire ladite donnée confidentielle.

Dans un premier temps, la donnée bruitée w' à traiter est modifiée de manière analogue à celle dont la donnée de référence w a été modifiée lors de la phase d'enrôlement, en utilisant la clé secrète Sₖ. Dans l'exemple, les valeurs de la liste V sont insérées 212 dans la donnée bruitée w' aux positions précisées par la liste P. Une donnée bruitée étendue wₑ' de taille L est ainsi obtenue et une fonction de décodage par « secure sketch » classique peut être appliquée sur la donnée bruitée étendue wₑ'.

Dans l'exemple, un mot c' de taille L est déterminé 214 comme suit : c'= wₑ' ⊕ s. Puis, la fonction de décodage 216 du code correcteur C est utilisée pour retrouver le mot de code c choisi lors de la phase d'enrôlement : c"=Decode_{c}(c'). Le mot de code c n'est pas retrouvé si le mot c' lui est trop éloigné au sens de la distance de Hamming, autrement dit si la donnée bruitée étendue wₑ' était trop éloignée de la donnée de référence étendue wₑ. En d'autres termes, le mot c" issu du décodage 216 appartient au code correcteur C sélectionné mais n'est pas identique au mot c initialement choisi lors de la phase d'enrôlement. Enfin, dans le cas contraire où le mot de code c a été retrouvé, la donnée étendue wₑ est rétablie avec l'opération 218 suivante : wₛ= s ⊕ c, wₛ étant une donnée stabilisée égale à wₑ. Dans le cas où le mot c" issu du décodage n'est pas le même que le mot initial c, l'opération 218 de combinaison avec la donnée de reconstruction s produit une donnée wₛ différente de la donnée étendue wₑ.

Le procédé selon l'invention permet donc d'allonger la donnée bruitée w' sans augmenter le bruit subi par ladite donnée, puisque les valeurs de V insérées dans la donnée bruitée w' sont identiques et aux mêmes positions dans la phase d'enrôlement et dans la phase de correction. Aussi, la valeur du paramètre d peut être laissée inchangée tandis que la valeur maximale atteignable par le paramètre k du code correcteur d'erreur, égale à longueur(wₑ)-d+1, (c'est-à-dire égale à L-d+1) est augmentée de la valeur L-n. Par conséquent, l'ensemble des codes correcteurs répondant à la fois aux exigences de correction de bruit et de sécurité est élargi.

En outre, la clé secrète Sₖ est beaucoup plus courte en taille que la clé cryptographique à produire, ce qui la rend enregistrable dans un appareil électronique à faible capacité de mémorisation. Pour une donnée binaire, une clé secrète Sₖ définie par un couple de listes (V, P) mobilise L-n bits pour la mémorisation des bits de valeurs de la première liste V et moins de (L-n)*log₂(n) bits pour la mémorisation des positions d'insertion appartenant à la seconde liste P.

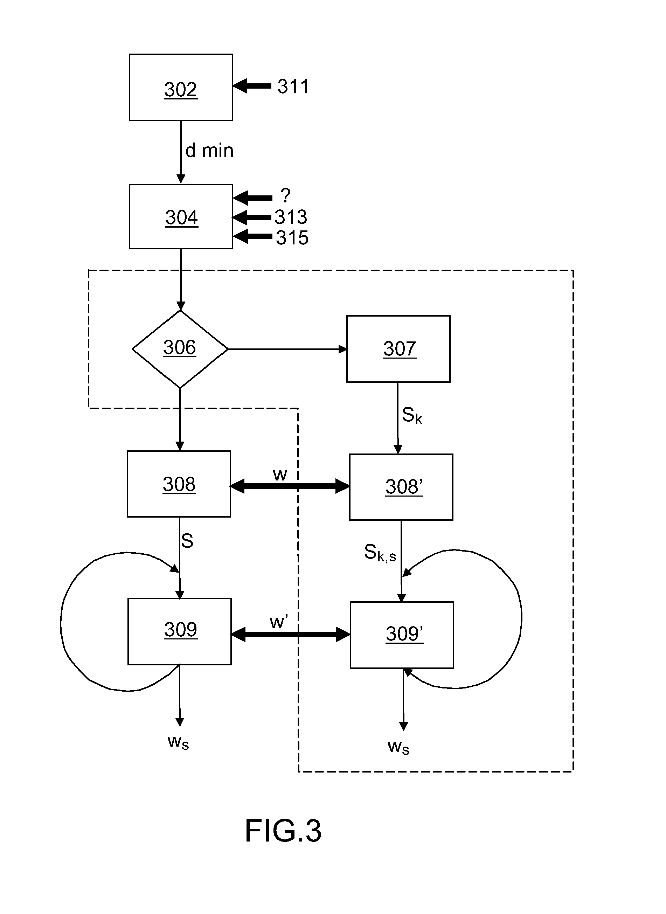

La figure 3 illustre, via un synoptique, un cadre d'exécution du procédé selon l'invention. En pratique, lors de la mise en oeuvre du procédé, les actions suivantes peuvent être effectuées : compte tenu d'un niveau de bruit 311 connu en sortie d'une PUF d'un composant électronique, par exemple, on détermine 302 d'abord la valeur minimale dₘᵢₙ que doit prendre le paramètre d du code correcteur d'erreur à utiliser dans la procédure de « secure sketch». Etant donnés, ensuite, la longueur n de la donnée d'entrée w à traiter, et les niveaux souhaités de sécurité 313 et d'efficacité du décodage 315 du code, on sélectionne 304 un code correcteur d'erreur C, par exemple dans une table de codes connus. Avantageusement, le code correcteur sélectionné est celui de longueur minimale satisfaisant le critère de sécurité.

Un test 306 est ensuite effectué pour déterminer si le code correcteur d'erreur C qui a été sélectionné a une longueur L supérieure à la longueur n de la donnée d'entrée w, parce qu'aucun code correcteur de longueur L égale à n et satisfaisant l'exigence de capacité de correction minimale dₘᵢₙ n'a pu être trouvé. Si le test 306 indique que la longueur du code correcteur sélectionné C est égale à n, alors une phase d'enrôlement classique 308 et des phases de correction classiques 309 peuvent être exécutées sans qu'il soit nécessaire d'augmenter la taille de la donnée entrante w ou w'.

A contrario, si le code correcteur d'erreur C sélectionné a une longueur L supérieure à la longueur n de la donnée d'entrée w, alors une clé secrète Sₖ doit être créée 307. La taille de la clé secrète Sₖ est déterminée pour que la longueur de la donnée étendue wₑ soit égale à la longueur du code. En l'espèce, une clé secrète Sₖ comprenant L-n valeurs est donc créée, puis les phases d'enrôlement 308' et de correction 309' sont exécutées conformément au procédé selon l'invention décrit plus haut.

Ainsi, par rapport à un schéma classique, les étapes de test 306, de création 307 de la clé secrète Sₖ, d'enrôlement 308' et de correction 309', entourées en pointillés sur la figure 3, sont ajoutées.

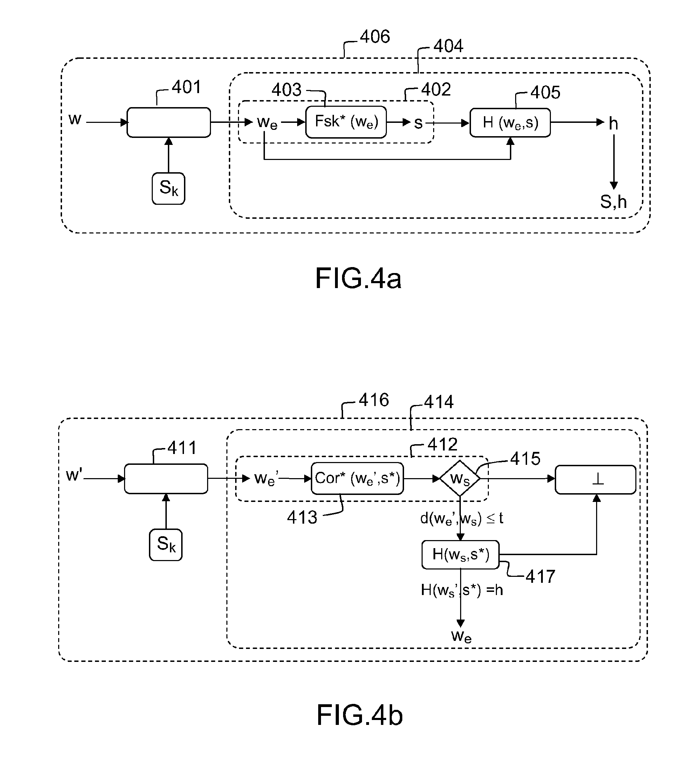

Les figures 4a et 4b présentent une deuxième mise en oeuvre du procédé selon l'invention montrant que le procédé selon l'invention peut également être appliqué à un module de « secure sketch » robuste, module présenté par Boyen et al dans « Secure remote authentification using biometric data », EUROCRYPT 2005: LNCS, vol. 3494, pages 147-163, Springer. Ce module a été développé pour pallier les vulnérabilités des extracteurs flous à un attaquant modifiant la donnée publique s de reconstruction directement sur son support de stockage ou pendant sa transmission vers l'unité de calcul mettant en oeuvre la phase de correction du « secure sketch». Un extracteur flou utilisant un module de « secure sketch » robuste permettent ainsi de sécuriser une authentification en présence d'un attaquant actif. Ils permettent à un utilisateur et au dispositif stockant les données secrètes des utilisateurs de s'authentifier mutuellement à travers un canal de communication non sûr. A ces fins de sécurisation, une couche d'authentification est ajoutée à la donnée publique s, grâce à laquelle un utilisateur peut quitter le protocole en cas de falsification.

En choisissant judicieusement une fonction de hachage, il est possible de faire de chaque extracteur flou un extracteur flou robuste. Soient w et w' des réponses d'une PUF d'un composant électronique, avec w' proche de w. Soit H : {0,1}* → {0,1}^{P} une fonction de hachage transformant une donnée de longueur quelconque en donnée de longueur p. Un module de « secure sketch » robuste, comprenant les fonctions d'enrôlement Fsk et de correction Cor, est construit à partir de n'importe quel « secure sketch » standard, comprenant les fonctions d'enrôlement Fsk* et de correction Cor*, de la façon suivante :
i) l'enrôlement de la donnée de référence w est effectué pour obtenir une donnée de reconstruction classique s* : s* ← Fsk*(w)
ii) Une fonction de hachage est appliquée sur la donnée de reconstruction s* et sur la donnée de référence w pour obtenir une donnée hachée h de contrôle h = H(w, s*)
Les données produites par l'enrôlement sont donc la donnée de reconstruction s* et la donnée hachée h de contrôle.

Avantageusement, la fonction de hachage H utilisée dans le « secure sketch » robuste est différente de la fonction de hachage qui est utilisée pour l'extraction d'aléas lorsqu'on souhaite générer une clé cryptographique.

Par la suite, la phase de corrélation utilise la donnée h de contrôle pour s'assurer que la donnée de reconstruction s* n'a pas été modifiée malicieusement.
i) Une donnée stabilisée wₛ est tout d'abord produite de manière classique à partir d'une donnée bruitée w' et de la donnée de reconstruction s*.
ii) Ensuite, un test est effectué pour déterminer si la distance séparant la donnée stabilisée wₛ obtenue de la donnée bruitée est supérieure à un seuil (le seuil est la capacité de correction du code utilisé). Si tel est le cas, un indicateur d'erreur ⊥ est retourné à la place de la donnée stabilisée wₛ.
iii) Puis, un second test est appliqué pour déterminer si l'application de la fonction de hachage H sur la donnée stabilisée wₛ et sur la donnée de reconstruction s* produit une donnée hachée identique à la donnée hachée h de contrôle produite lors de la phase d'enrôlement. Si ces données hachées sont différentes l'une de l'autre, alors un indicateur d'erreur ⊥ est retourné à la place de la donnée stabilisée wₛ.

La figure 4a est un synoptique illustrant les étapes d'une phase d'enrôlement exécutée lors de cette deuxième mise en oeuvre du procédé selon l'invention.
Le procédé selon l'invention peut être combiné à un module « secure sketch » robuste de manière à cumuler les avantages procurés par chacun.

Soit Sₖ une clé secrète exprimée sous la forme d'une double liste (V,P). Soit f une fonction d'expansion permettant d'augmenter la taille d'une donnée w à traiter avec une clé Sₖ. Alors, un « secure sketch » robuste comprenant une sécurisation telle que proposée par l'invention peut être obtenue comme suit :
i) Augmenter, 401, la taille de la donnée de référence w pour obtenir une donnée de référence étendue wₑ: wₑ ← f(w, Sₖ).
ii) Générer, 403, une donnée de reconstruction s* à partir de la donnée de référence étendue wₑ à l'aide du « secure sketch » standard.
iii) Appliquer, 405, une fonction de hachage H sur la donnée de référence étendue wₑ et sur la donnée de reconstruction s* pour obtenir une donnée hachée h de contrôle: h = H(wₑ, s*)
Les données produites par l'enrôlement sont donc la donnée de reconstruction s* de taille augmentée et la donnée hachée h de contrôle qui est notamment fonction de la donnée de référence étendue wₑ.

Les imbrications fonctionnelles apparaissent clairement sur la figure 4a : une fonction d'enrôlement « secure sketch » standard 402 est imbriquée dans une fonction d'enrôlement de type « secure sketch » robuste 404, elle-même imbriquée par le procédé d'enrôlement selon l'invention 406. Le procédé d'enrôlement selon l'invention peut donc aisément s'adapter à une architecture déjà établie.

La figure 4b est un synoptique illustrant les étapes d'une phase de correction exécutée lors de la deuxième mise en oeuvre du procédé selon l'invention. La phase de correction comprenant les avantages combinés du « secure sketch » robuste et du procédé selon l'invention est obtenue comme suit :
i) Effectuer, 411, sur la donnée bruitée w' un traitement analogue à celui 401 opéré sur la donnée de référence w lors de la phase d'enrôlement ; cette donnée bruitée w' est étendue avec une clé Sₖ.
ii) Produire, 413, une donnée stabilisée wₛ à partir de la donnée bruitée étendue wₑ' et de la donnée de reconstruction s*.
iii) Ensuite, appliquer un test 415 pour déterminer si la distance séparant la donnée stabilisée wₛ obtenue de la donnée bruitée étendue wₑ' est supérieure à un seuil, ce seuil est la capacité t de correction du code correcteur d'erreur C. Si tel est le cas, un indicateur d'erreur ⊥ est retourné à la place de la donnée stabilisée wₛ.
iv) Puis, un second test 417 est appliqué pour déterminer si l'application de la fonction de hachage H sur la donnée stabilisée wₛ et sur la donnée de reconstruction s* produit une donnée hachée identique à la donnée hachée h de contrôle produite lors de la phase d'enrôlement. Si ces données hachées sont différentes l'une de l'autre, alors un indicateur d'erreur ⊥ est retourné à la place de la donnée stabilisée wₛ. Dans le cas contraire, la donnée stabilisée wₛ, égale à la donnée de référence étendue wₑ, est produite en sortie.

De nouveau, les imbrications fonctionnelles apparaissent clairement sur la figure 4b : une fonction de correction « secure sketch » standard 412 est imbriquée dans une fonction de correction de type « secure sketch » robuste 414, elle-même imbriquée par le procédé de correction selon l'invention 416. Le procédé de correction selon l'invention peut donc aisément s'adapter à une architecture déjà établie.

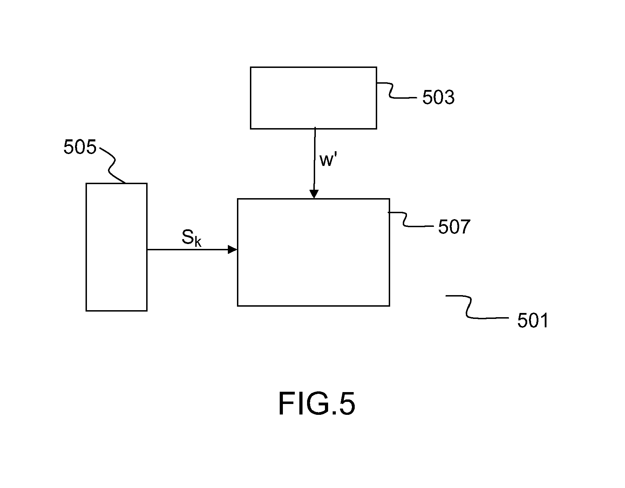

La figure 5 présente un système électronique mettant en oeuvre le procédé d'authentification selon l'invention.

Le système 501 comprend un capteur biométrique 503, un support d'enregistrement 505 mémorisant une clé secrète Sₖ et une unité de calcul 507 mettant en oeuvre le procédé d'authentification selon l'invention. L'unité de calcul 507 est apte à recevoir la clé secrète Sₖ issue du support d'enregistrement 505 et une donnée bruitée w' issue du capteur biométrique 503.

A titre d'illustration, un individu à identifier génère, via le capteur biométrique 503, une donnée w' qui lui est propre. Le support d'enregistrement 505 (par exemple une clé USB, un disque réseau) est connecté à l'unité de calcul et fournit la clé secrète Sₖ. L'unité de calcul 507 tente à partir de ces deux données w', Sₖ, de reconstruire la donnée de référence w produite lors d'une phase d'enrôlement préalable.

Sans sortir du cadre de l'invention, le capteur biométrique 503 peut être remplacé par une PUF, par exemple une PUF d'un composant électronique.

## Revendications

1. Procédé d'enrôlement d'une donnée de référence w à n chiffres, exécuté par une unité de calcul, ledit procédé étant **caractérisé en ce qu'**il comprend au moins les étapes suivantes :
■ sélectionner un code correcteur d'erreur C d'une longueur L supérieure à n, la capacité de correction du code correcteur d'erreur étant supérieure au nombre attendu d'erreurs entre deux acquisitions de la donnée de référence w, le code correcteur ayant une dimension minimale prédéterminée correspondant à un niveau minimal de sécurité ;
■ générer (202) une donnée étendue wₑ en augmentant la taille de la donnée de référence w avec L-n chiffres composant une clé secrète Sₖ;
■ hoisir aléatoirement un mot c du code correcteur d'erreur C sélectionné ;
■ combiner ledit mot c avec ladite donnée étendue wₑ, de manière à générer une donnée s de reconstruction de wₑ;
■ enregistrer la donnée s sur un support de stockage.

2. Procédé d'enrôlement selon la revendication 1, **caractérisé en ce que** la clé Sₖ est définie par un couple de listes (V, P), la première liste V comprenant L-n chiffres à insérer dans la donnée de référence w, la seconde liste P comprenant pour chacun desdits chiffres à insérer sa position dans ladite donnée.

3. Procédé de correction de données pour reconstruire une donnée de référence étendue _{We} à L chiffres à partir d'une donnée bruitée w' à n chiffres, n≤L, et d'une donnée s de reconstruction générée lors de l'enrôlement de la donnée de référence w avec le procédé selon la revendication 1 ou 2, ledit procédé de correction étant **caractérisé en ce qu'**il comprend au moins les étapes suivantes :
■ générer (212) une donnée bruitée étendue wₑ' en augmentant la taille de la donnée bruitée w' avec L-n chiffres composant ladite clé Sₖ;
■ combiner (214) la donnée s de reconstruction avec la donnée bruitée étendue wₑ' pour obtenir un mot c' de longueur L ;
■ décoder (216) le mot c' en mot c" appartenant au code C;
■ combiner (218) le mot c" avec la donnée s de reconstruction pour générer une donnée stabilisée wₛ égale à la donnée de référence étendue wₑ si le mot c" obtenu par décodage est identique au mot c.

4. Procédé de correction de données selon la revendication 3, **caractérisé en ce que** la donnée bruitée w' est fournie par une fonction liée aux caractéristiques physiques propres à un circuit électronique.

5. Procédé de correction de données selon la revendication 3, **caractérisé en ce que** la donnée bruitée w' est fournie par un capteur biométrique.

6. Procédé de stabilisation sécurisé de données comprenant une étape (302) de détermination de la capacité de correction minimale du code correcteur d'erreur C à employer pour stabiliser lesdites données en fonction du niveau de bruit dont elles sont affectées, une étape de sélection (304) dudit code correcteur d'erreur C parmi plusieurs codes disponibles, le procédé étant **caractérisé en ce que** ledit code sélectionné C peut avoir une longueur supérieure à la longueur n desdites données, un test (306) étant effectué pour déterminer si ledit code sélectionné C a une longueur supérieure à n, le procédé comprenant une étape de création d'une clé Sₖ dans le cas où ledit code C sélectionné a une longueur supérieure à n, au moins un procédé d'enrôlement (308') selon la revendication 1 ou 2 suivi d'un procédé de correction (309') selon l'une des revendications 3 à 5 étant exécutés pour générer une donnée stabilisée.

7. Procédé d'authentification et/ou de génération d'une clé cryptographique comprenant une étape d'extraction d'aléa appliquée à la donnée stabilisée wₛ générée par le procédé de stabilisation sécurisé de données selon la revendication 6.

8. Procédé d'enrôlement d'une donnée de référence w selon la revendication 1 ou 2, le procédé étant **caractérisé en ce que** l'on produit une donnée hachée h de contrôle en appliquant (405) une fonction de hachage H sur une combinaison de la donnée de référence étendue wₑ avec la donnée de reconstruction s.

9. Procédé de correction de données exécuté par une unité de calcul pour reconstruire une donnée de référence étendue wₑ à L chiffres à partir d'une donnée bruitée w' à n chiffres, n≤L, et d'une donnée s de reconstruction générée lors de l'enrôlement de la donnée de référence w avec le procédé selon la revendication 8, ledit procédé étant **caractérisé en ce qu'**il comprend au moins les étapes suivantes :
■ générer (411) une donnée bruitée étendue wₑ' en augmentant la taille de la donnée bruitée w' avec L-n chiffres composant ladite clé Sₖ;
■ combiner (413) la donnée s de reconstruction avec la donnée bruitée étendue wₑ' pour obtenir un mot c' de longueur L ;
■ décoder (413) le mot c' en mot c" appartenant au code C;
■ combiner (413) le mot c" avec la donnée s de reconstruction pour générer une donnée stabilisée wₛ;
■ appliquer (417) la fonction de hachage H sur une combinaison de la donnée stabilisée avec la donnée s de reconstruction pour produire une donnée hachée hₛ;
■ comparer la donnée hachée h de contrôle, obtenue lors de l'enrôlement, avec la donnée hachée hₛ;
■ si les données h et hₛ sont différentes, produire une valeur ⊥ indiquant une erreur.

10. Système électronique d'authentification comportant un capteur biométrique, **caractérisé en ce qu'**il comprend un support d'enregistrement mémorisant une clé secrète Sₖ, une unité de calcul mettant en oeuvre le procédé selon la revendication 7, ladite unité de calcul étant apte à recevoir la clé secrète Sₖ issue dudit support et une donnée bruitée w' issue dudit capteur.
